Europäisches Patentamt

European Patent Office

Office européen des brevets

(11) Veröffentlichungsnummer: **0 193 110 B1**

# EUROPÄISCHE PATENTSCHRIFT

(45) Veröffentlichungstag der Patentschrift: **18.12.91**

(21) Anmeldenummer: **86102198.8**

(22) Anmeldetag: **20.02.86**

(51) Int. Cl.⁵: **C08J 3/24**, C08L 23/08, C08K 5/09

(54) **Verfahren zur ionischen Vernetzung eines Ethylencopolymerisats.**

(30) Priorität: **26.02.85 DE 3506682**

(43) Veröffentlichungstag der Anmeldung:
**03.09.86 Patentblatt 86/36**

(45) Bekanntmachung des Hinweises auf die
Patenterteilung:
**18.12.91 Patentblatt 91/51**

(84) Benannte Vertragsstaaten:
**AT BE DE FR GB NL**

(56) Entgegenhaltungen:
**DE-A- 1 520 506**
**DE-A- 1 745 939**

(73) Patentinhaber: **BASF Aktiengesellschaft**
**Carl-Bosch-Strasse 38**
**W-6700 Ludwigshafen(DE)**

(72) Erfinder: **Ziegler, Walter, Dr.**
**Starenweg 15**
**W-6803 Edingen-Neckarhausen(DE)**
Erfinder: **Brandstetter, Franz, Dr.**
**Ritterbueschel 45**
**W-6730 Neustadt(DE)**
Erfinder: **Weiss, Frank, Dr.**
**Rossdorfer Strasse 77**
**W-6100 Darmstadt(DE)**
Erfinder: **Schlemmer, Lothar**
**Duisbergstrasse 1a**
**W-6701 Maxdorf(DE)**

## Beschreibung

Die Erfindung betrifft ein Verfahren zur Herstellung von ionisch vernetzten Ethylencopolymerisaten durch Mischen von Ethylencopolymerisaten, die 0,1 bis 20 Mol.% $\alpha,\beta$-ethylenisch ungesättigte Carbonsäuren oder $\alpha,\beta$-ethylenisch ungesättigte Carboxylgruppen liefernde Comonomere einpolymerisiert enthalten, mit einem wasserlöslichen Metallsalz bei Temperaturen oberhalb des Schmelzpunktes des Ethylencopolymerisats.

Bei derartigen Verfahren werden thermoplastische Ethylencopolymerisate mit carboxylgruppenhaltigen Monomeren, von denen ein Teil als freie Carboxylgruppen vorliegt, der Rest mit Metallkationen gebunden ist, erhalten, so daß eine gewisse Quervernetzung erreicht wird.

Verfahren zum Modifizieren von Carboxylgruppen-enthaltenden Ethylencopolymeren sind beispielsweise in den US-Patenten 32 64 272 und 39 69 434 und im britischen Patent 1 475 336 beschrieben. Die Herstellung erfolgt hierbei einmal auf Kautschukmahlwerken, Zweiwalzenmahlwerken und Plastifizierungsextrudern mit einem Längen/Durchmesserverhältnis von 21 oder, wie bei der DE-A-1745939, auf einem Einwellenextruder wie er beispielsweise im US-Patent 3006029 beschrieben ist.

Die bekannten Verfahren weisen jedoch den Nachteil auf, daß die Homogenität der erhaltenen ionisch vernetzten Ethylencopolymerisate zu wünschen übrig läßt.

Aufgabe der Erfindung war es also, ein Verfahren zur ionischen Vernetzung von Ethylencopolymerisaten aufzufinden, das zu Produkten mit verbesserter Homogenität führt.

Diese Aufgabe wird durch das eingangs beschriebene Verfahren gelöst, wobei in einem Zweiwellenextruder dessen Schneckengehäuse und Schneckenelemente aus korrosionsfesten Werkstoffen gefertigt sind in einer Mischzone eine mindestens 10-gew.%ige wäßrige Lösung von Zinkacetat, Natriumacetat oder Zinkformiat mit der Schmelze des Ethylencopolymerisats bei Temperaturen im Bereich von 140 bis 200 °C, bevorzugt 160 bis 180 °C, gemischt und anschließend in mindestens einer nachfolgenden Zone des Extruders die Temperatur der Mischung auf maximal 230°C, bevorzugt 200 bis 225°C, gebracht wird.

Als Ethylencopolymerisate kommen Copolymerisate des Ethylens, die 0,1 - 20 Mol.% vorzugsweise 0,5 - 10 Mol.%, bezogen auf das Copolymerisat, $\alpha,\beta$-ethylenisch ungesättigte Carbonsäuren oder $\alpha,\beta$-ethylenisch ungesättigte Carboxylgruppen liefernde Comonomere einpolymerisiert enthalten, in Frage. Unter $\alpha,\beta$-ethylenisch ungesättigten Carbonsäuren werden dabei die üblichen mit Ethylen copolymerisierbaren Carbonsäuren wie Acrylsäure, Methacrylsäure, Itakonsäure, Maleinsäure oder Fumarsäure verstanden. $\alpha,\beta$-Ethylenisch ungesättigte, Carboxylgruppen liefernde Comonomere sind beispielsweise Methylhydrogenmaleinat, Maleinsäureanhydrid, tert.-Butylacrylat etc., d.h. Comonomere, die während oder nach der Polymerisation durch Hydrolyse und/oder Pyrolyse in Carboxylgruppen enthaltende Comonomere umgesetzt werden. Die Ethylencopolymerisate können neben den $\alpha,\beta$-ethylenisch ungesättigten Carbonsäuren bzw. Carboxylgruppen liefernden Comonomeren noch andere mit Ethylen copolymerisierbare Comonomere einpolymerisiert enthalten (vgl. EP-A1-106999). Hierbei kommen insbesondere in Frage Ester der (Meth)acrylsäure, Mono- und Diester der Maleinsäure und Fumarsäure, Amide monoethylenisch ungesättigter Carbonsäuren, insbesondere (Meth)-acrylsäureamid sowie N-mono- und N,N-Dialkylamide der (Meth)acrylsäure. Die Ethylencopolymerisate sind an sich bekannt und beispielsweise in den Literaturstellen GB-A-2 091 745, US-A-3 520 861, US-A-3 264 272, GB-A-1 011 981, US-A-3 404 134 oder US-A-3 969 434 beschrieben.

Die Schmelzindices der Ethylencopolymerisate liegen im allgemeinen im Bereich von 0,1 - 500 g/10 min gemessen bei 190°C und 2,16 kp (nach DIN 53 735). Bevorzugt sind Produkte mit einem Schmelzindex von 5 - 80 g/10 min. Die Schmelzpunkte der Ethylencopolymerisate liegen im Bereich von 70 bis 115 °C.

Unter wasserlöslichen Metallsalzen werden Verbindungen verstanden, wie sie beispielsweise in der US-A-3 264 272 definiert sind. Bevorzugt sind hierbei Verbindungen mit Metallionen wie Natrium und Zink. Besonders bevorzugt ist Zinkacetat, Natriumacetat oder Zinkformiat.

Im allgemeinen werden mindestens 10 Gew.% der Säuregruppierungen im Ethylencopolymerisat neutralisiert. Die Bestimmung des Neutralisationsgrades kann hierbei durch IR-Analysen, durch Titration bzw. durch Metallanalyse erfolgen.

Die ionische Vernetzung des Ethylencopolymerisates mit den Metallionen erfolgt beispielsweise in einem kämmenden Doppelschnecken-Mischextruder mit zwei- oder mehrgängigem Schneckenprofil. Der Verfahrensteil dieses Extruders besteht aus folgenden, in Produktflußrichtung hintereinander angeordneten Zonen: Einzugszone - Aufschmelzzone - Misch- und Homogenisierungszone - Entgasungszone und Austragszone.

Das Ethylencopolymerisat wird in die erste Zone eingespeist und von dort in die zweite Zone (Aufschmelzzone) weitergefördert. Die Schnecken der ersten Zone sind daher förderwirksam ausgebildet. Diese Zone weist eine Länge von 2- bis 5-fachen des Schneckendurchmessers auf. Die erste Zone ist nicht beheizt, gegebenenfalls sogar gekühlt.

In der zweiten Zone, deren Länge im allgemeinen das 4- bis 8-fache des Schneckendurchmessers beträgt, wird das Copolymerisat durch Wärmezufuhr von außen und durch in das Produkt eingeleitete Knetarbeit mittels entsprechend angeordneter Knetscheiben aufgeschmolzen.

In der dritten Zone wird die bevorzugt mindestens 10-gew.%ige wäßrige Lösung des Metallsalzes zudosiert und homogen in die Schmelze des Ethylencopolymerisates eingemischt. Die Einspritzstelle der Lösung soll im ersten Drittel der ca. 6 bis 15 x D (D = Durchmesser der Schnecke) langen dritten Zone liegen. Die Schnecken in dieser Zone sind so ausgebildet, daß man einen raschen, optimalen Misch- und Homogenisierungseffekt erhält. Beispielsweise können die zum Mischen und Homogenisieren bekannten Knetscheiben-Schneckenelemente eingesetzt werden, wodurch eine intensive Quervermischung und gute Dispergierwirkung durch Erzeugung von Scherfeldern unterschiedlicher Stärke bewirkt wird. Zur Erzielung eines guten Misch- und Dispergiereffektes sollen die Mischund Knetelemente gut gefüllt sein, was man z.B. durch nachgeschaltete Schneckenelemente mit Rückfördergewinde erreichen kann. In der erhaltenen Polymerschmelze liegen keine unterschiedlichen Salzkonzentrationen vor, sie ist homogen.

Der dritten Zone folgt eine Entgasungszone nach, in der die flüchtigen Bestandteile aus dem ionisch vernetzten Copolymerisat entfernt werden. Die Länge der Entgasungszone beträgt im allgemeinen das 3- bis 10-fache des Schneckendurchmessers. Die Entgasung der Schmelze erfolgt vorzugsweise durch Anlegung eines geeigneten und evtl. gestuften Unterdrucks an einen oder mehreren hintereinander angeordneten Entgasungsstutzen. Die Entgasungsöffnungen müssen so gestaltet sein, daß das Produkt nicht aus der Öffnung herausgedrückt und nicht unkontrolliert wieder eingezogen wird. Dies ist wichtig zur Verhinderung von Stippenbildung. Beim Entfernen der flüchtigen Bestandteile in einer oder mehreren Vakuumzonen sind diese Zonen durch von den Schnecken aufgebaute Schmelzedichtungen voneinander abgetrennt. Im Entgasungsbereich sind die Schneckengänge nur teilgefüllt, so daß sich eine große Schmelzeoberfläche ausbildet.

Die fünfte Zone (Austragszone) dient dem Massedruckaufbau zur Überwindung des vom Düsenkopf ausgeübten Widerstandes. Diese etwa 3 bis 6 x D lange Zone ist mit Schneckenelementen kleiner Gangsteigung bestückt.

Die Schneckengehäuse und Schneckenelemente des Extruder-Verfahrensteils sind aus korrosionsfesten Werkstoffen gefertigt. Geeignet sind z.B. legierte halbaustenitische und austenitische Chrom- bzw. Chrom/Nickel/(Molibdän)-Stähle entspr. den Werkstoff-Nrn. 1.4122, 1.4460, 1.4540, 1.4542 nach DIN 17007. Besonders geeignet ist der Werkstoff "Hastelloy C", ein Nickel/Molybdän/Chrom-Stahl der Werkstoff-NR. 24819. Extruder der oben beschriebenen Art sind aus der Monographie von H. Herrmann, "Schneckenmaschinen in der Verfahrenstechnik", Springer-Verlag, 1972, bekannt.

Zur Erhöhung des Verschleißschutzes sind die Schneckenkämme mit einer Stellit-Auflage versehen.

Entscheidend für das erfindungsgemäße Verfahren ist nun, daß die Zugabe der Lösung des Metallsalzes zur Schmelze des Ethylencopolymerisates bei einem Temperaturbereich von 140 - 200°C in der Mischzone der Zweiwellenmaschine erfolgt und daß in der Entgasungszone und in der Austragszone die Temperatur maximal 230°C, bevorzugt 200 - 225°C beträgt.

Die nach dem erfindungsgemäßen Verfahren erhaltenen ionisch vernetzten Ethylencopolymerisate besitzen eine ausgezeichnete Homogenität.

## Beispiel 1

In die Einzugszone eines Zweischneckenkneters des oben beschriebenen Typs mit einem Durchmesser von 5,7 cm und einem Längen/Durchmesser-Verhältnis von 33 werden 50 kg/h eines Ethylen-Acrylsäure(E/AS)-Copolymerisates (8 Gew.% AS, MFI-Wert 15 g/10 min) zudosiert. Die Länge der Einzugszone beträgt das Dreifache des Schneckendurchmessers (3 D).

Das Copolymerisat wird in der Aufschmelzzone mit einer Länge von 6 D bei 140°C aufgeschmolzen und in die Misch- und Homogenisierungszone mit einer Länge von 9 D überführt. Durch eine durch die Zylinderwand hindurchführende Bohrung werden 7,0 Liter/h einer 20-gew.%igen wäßrigen Zinkacetatlösung in die Schmelze eingespritzt. Das Copolymerisat und die Zinkacetatlösung werden bei 180°C gemischt und zur Reaktion gebracht. Die dabei freiwerdende Essigsäure und das mit der Zinkacetatlösung eingebrachte Wasser werden in der nachfolgenden Entgasungszone mit einer Länge von 9 D bei 220°C an 2 hintereinander angeordneten Entgasungsstutzen bei Unterdruck abgezogen. Am 1. Entgasungsstutzen wird ein Druck von ca. 200 mbar, am 2. Entgasungsstutzen von ca. 20 mbar eingehalten.

Über die am Ende der Austragszone (Länge: 6 D; Temperatur: 220°C) angebrachte Düsenplatte wird das ionisch vernetzte Copolymerisat in Form von Strängen extrudiert, die in Wasser gekühlt und in der üblichen Art granuliert werden. In dem erhaltenen Endprodukt sind 31,1 % der Carboxylgruppen mit Zinkionen neutralisiert, der MFI-Wert beträgt 1,9 g/10 min.

## Beispiel 2

Es wird wie bei Beispiel 1 verfahren. Als Ausgangsmaterial wird ein Ethylen-Acrylsäure-n-Butylacrylat-Terpolymerisat (8,5 Gew.% AS, 10 Gew.% nBA, MFI 14,5 g/10 min) verwendet. Die Menge an Neutralisationsmittel beträgt 6,85 Liter/h einer 20-gew.%igen wäßrigen Zinkacetatlösung. Das ionisch vernetzte Endprodukt weist einen Neutralisationsgrad von 28,5 % und einen MFI-Wert von 1,5 g/10 min auf.

Beispiel 3

Es wird wie bei Beispiel 1 verfahren. Als Ausgangsmaterial wird das Ethylen-Acrylsäure-Copolymerisat von Beispiel 1 verwendet. Für die Neutralisationsreaktion werden 4,8 Liter/h einer 20-gew.%igen wäßrigen Natriumacetatlösung eingesetzt. Das ionisch vernetzte Endprodukt weist einen Neutralisationsgrad von 23,3 % und einen MFI-Wert von 3,6 g/10 min auf.

**Patentansprüche**

1. Verfahren zur Herstellung von ionisch vernetzten Ethylencopolymerisaten durch Mischen von Ethylencopolymerisaten, die 0,1 bis 20 Mol-% α, β-ethylenisch ungesättigte Carbonsäuren oder α,β-ethylenisch ungesättigte Carboxylgruppen liefernde Comonomere einpolymerisiert enthalten, mit einem wasserlöslichen Metallsalz bei Temperaturen oberhalb des Schmelzpunktes des Ethylencopolymerisats, dadurch gekennzeichnet, daß in einem Zweiwellenextruder, dessen Schneckengehäuse und Schneckenelemente aus korrosionsfesten Werkstoffen gefertigt sind, in einer Mischzone eine mindestens 10 gew.-%ige wäßrige Lösung von Zinkacetat, Natriumacetat oder Zinkformiat mit der Schmelze des Ethylencopolymerisates bei Temperatur im Bereich von 140 bis 200°C homogen gemischt wird und anschließend die resultierende Mischung in mindestens einer nachfolgenden Zone des Extruders auf eine Temperatur von maximal 230°C gebracht wird.

**Claims**

1. A process for the preparation of an ionically crosslinked ethylene copolymer by mixing an ethylene copolymer containing from 0.1 to 20 mol-% of copolymerized α,β-ethylenically unsaturated carboxylic acids or comonomers generating α,β-ethylenically unsaturated carboxyl groups, with a water-soluble metal salt at above the melting point of the ethylene copolymer, which comprises homogeneously mixing an at least 10% strength by weight aqueous solution of zinc acetate, sodium acetate or zinc formate with the melt of the ethylene copolymer at from 140 to 200°C in a mixing zone of a twin-screw extruder whose screw housing and screw elements are made from corrosion-resistant materials, and subsequently introducing the resultant mixture into at least one subsequent zone of the extruder at a maximum of 230°C.

**Revendications**

1. Procédé de préparation de copolymères d'éthylène réticulés ioniquement, par mélange de copolymères d'éthylène, qui contiennent en liaison polymère de 0,1 à 20% en moles d'acides carboxyliques insaturés α,β-oléfiniquement ou de comonomères fournissant des groupements carboxyle insaturés α,β-oléfiniquement, avec un sel métallique hydrosoluble, à des températures supérieures au point de fusion du copolymère d'éthylène, caractérisé en ce que dans une extrudeuse à deux arbres, dont le carter des vis et les éléments des vis sont fabriqués en matériaux résistants à la corrosion, une solution aqueuse à 10% en poids au moins d'acétate de zinc, d'acétate de sodium ou de formiate de zinc est mélangée de façon homogène, dans une zone de mélange, avec la masse fondue du copolymère d'éthylène à une température dans la gamme de 140 à 200°C, puis le mélange résultant est porté à une température de 230°C au maximum dans au moins une zone suivante de l'extrudeuse.